(19) Europäisches Patentamt
European Patent Office
Office européen des brevets

(11) **EP 3 724 538 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **18819003.7**

(22) Anmeldetag: **30.11.2018**

(51) Int Cl.:
***F16H 55/08*** *(2006.01)*

(86) Internationale Anmeldenummer:
**PCT/EP2018/083161**

(87) Internationale Veröffentlichungsnummer:
**WO 2019/115256 (20.06.2019 Gazette 2019/25)**

(54) **VERZAHNTES MASCHINENELEMENT UND ZAHNRADGETRIEBE**

TOOTHED MACHINE ELEMENT AND GEAR DRIVE

ÉLÉMENT DE MACHINE DENTÉ ET TRANSMISSION PAR ENGRENAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2017 DE 102017129735**

(43) Veröffentlichungstag der Anmeldung:
**21.10.2020 Patentblatt 2020/43**

(73) Patentinhaber: **Technische Universität Darmstadt 64289 Darmstadt (DE)**

(72) Erfinder:
• **NEUBAUER, Philipp**
**64285 Darmstadt (DE)**
• **MELZ, Tobias**
**Dreieich 63303 (DE)**
• **BÖS, Joachim**
**64295 Darmstadt (DE)**
• **SLOMSKI, Elena**
**64285 Darmstadt (DE)**

(74) Vertreter: **LifeTech IP
Spies & Behrndt Patentanwälte PartG mbB
Elsenheimerstraße 47a
80687 München (DE)**

(56) Entgegenhaltungen:
**DE-A1- 3 533 743      DE-A1-102012 203 177
US-A- 4 036 073      US-A1- 2017 299 039**

**Beschreibung**

Die vorliegende Erfindung bezieht sich auf ein verzahntes oder strukturiertes Maschinenelement, ein Zahnradgetriebe, eine Zahnradpumpe und insbesondere auf eine unregelmäßige Zahnanordnung zur Geräuschminderung an Zahnradgetrieben.

Hintergrund

Bei Produktentwicklungen wird der Fokus in den letzten Jahren immer stärker auf die Akustik und die Schwingungen, die von Maschinen ausgehen, gelegt. So werden Antriebe in Pkw, bis hin zu Waschmaschinen in Privathaushalten, immer leiser und schwingungsärmer. Während Geräusche durch Zahneingriffe von Zahnradgetrieben früher häufig durch andere Geräuschquellen verdeckt ("maskiert") wurden, so fallen sie mittlerweile durch die geringeren Umgebungsgeräusche mehr und mehr negativ auf. Darüber hinaus sind Nutzer mittlerweile an einen hohen Komfortstandard gewöhnt. Insgesamt kommt es so zu häufigen Kundenbeanstandungen aufgrund des von Verzahnungen hervorgerufenen Geräusches.

Geräusche mit tonalem Charakter (einzelne, stark auffällige Töne, z. B. ein Pfeifen) werden vom Menschen als besonders lästig empfunden. Anders als Geräusche mit rauschartigem Charakter können jene mit tonalem Charakter vom Gehirn nur schlecht ausgeblendet werden. So wird das tonale Geräusch von quietschenden Bremsen als deutlich lästiger empfunden als das Rauschen eines Wasserfalls - auch dann, wenn der Wasserfall aus physikalischer Sicht das Geräusch mit dem höheren Schalldruck sein sollte. Auch die Frequenz oder ein dominanter enger Spektralbereich eines Schallsignals können den subjektiv empfundenen Störgrad beeinflussen.

In vielen Bereichen der Technik wird versucht, tonale Geräuschkomponenten zu reduzieren. Allgemein entstehen diese tonalen Komponenten durch sich periodisch wiederholende Anregungen des Luftschalls. So erzeugen konventionelle Lüfter tonale Geräuschkomponenten, indem die Lüfterschaufeln bei konstanter Drehzahl periodische Druckimpulse erzeugen, die als Luftschall abgestrahlt werden. Ein seit vielen Jahren bekannter Ansatz zur Reduktion der Tonalität der von Lüftern erzeugten Geräusche basiert auf der unregelmäßigen Verteilung von Lüfterschaufeln entlang des Umfangs. Durch diese unregelmäßige Verteilung von Lüfterschaufeln entlang des Umfangs wird die Periodizität des Geräuschs unterbrochen, wodurch der tonale Charakter reduziert wird. Dieses Verfahren wird bereits erfolgreich bei PC-Lüftern, Pkw-Lüftern und bei vielen anderen Lüfter-Anwendungen eingesetzt. Auch bei Pkw-Reifen wird das Prinzip der Unterbrechung der Periodizität eingesetzt. So kann die Länge der Profilelemente von Reifen entlang des Umfangs variiert werden, um das durch den Reifen-Fahrbahn-Kontakt entstehende Geräusch möglichst wenig tonal zu gestalten.

Aber auch Verzahnungen von Getrieben erzeugen überwiegend solche tonalen Geräuschanteile und werden daher als störend empfunden. Bei konventionellen Zahnradgetrieben greifen die Zähne, aufgrund des geometrisch streng regelmäßigen Aufbaus, periodisch ineinander ein. Durch diesen periodischen Vorgang entstehen die tonalen Geräusche, die unter dem Namen Getriebeheulen (engl.: gear whine) bekannt sind.

Aus dem Stand der Technik sind verschiedene Zahnräder bekannt, bei denen mit unterschiedlichen Mitteln das Zahneingriffsgeräusch gemindert wird. So beschreibt die deutsche Patentanmeldung DE 35 33 743 verzahnte Maschinenelemente zur Übertragung von Drehbewegungen, die ungleichmäßig oder pseudostochastisch beabstandete Zähne aufweisen. Dies soll das gemeinhin als "Getriebeheulen" oder "Getriebesingen" bezeichnete Geräusch bei Kraftfahrzeuggetrieben vermeiden. Die deutsche Patentanmeldung DE 39 34 841 offenbart auch ein schallgedämpftes Zahnradpaar, bei dem die Zähne der Zahnräder unterschiedliche Zahnkopfhöhen aufweisen. Die unterschiedlichen Zahnkopfhöhen werden durch eine nachträgliche Bearbeitung der Zahnradköpfe erreicht. In der deutschen Patentschrift DE 39 70 39 ist weiter beschrieben, dass statt kürzerer Zahnköpfe auch Zahnköpfe mit abgeschrägten Rändern oder Zahnflanken dazu eingesetzt werden können, um tonale Geräusche zu vermeiden. Weitere konventionelle verzahnte Maschinenelemente sind in US 4,036,073 offenbart.

Die aus dem Stand der Technik bekannten Zahnräder sind in der beschriebenen Ausführung wenig effektiv bei der Minderung des tonalen Geräusches und kommen mit großen Einschränkungen bei der Tragfähigkeit einher. Es besteht daher ein Bedarf an verzahnten Maschinenelementen oder Getrieben, bei denen die Tonalität und damit die subjektive Lästigkeit der Zahneingriffsgeräusche effektiv minimiert wird, während die Tragfähigkeit nur wenig eingeschränkt wird.

Zusammenfassung

Zumindest ein Teil der oben genannten Probleme wird durch ein verzahntes Maschinenelement nach Anspruch 1, ein Zahnradgetriebe nach Anspruch 6 und eine Zahnradpumpe nach Anspruch 10 gelöst.

Die vorliegende Erfindung bezieht sich auf ein verzahntes oder strukturiertes Maschinenelement, das insbesondere ein Zahnrad sein kann und zur Übertragung von Drehbewegungen dient. Das verzahnte Maschinenelement umfasst eine umlaufende Verzahnung mit mehreren Zahnelementen, um ein weiteres verzahntes Maschinenelement in Eingriff zu nehmen und dadurch die Übertragung der Drehbewegung auf das weitere Maschinenelement zu ermöglichen. Die mehreren Zahnelemente sind durch Geometrieparameter gekennzeichnet, wobei mindestens ein Zahnelement aus den mehreren Zahnelementen in mindestens einem der folgenden Geometrieparameter sich von anderen Zahnelementen aus den mehreren Zahnelementen unterscheidet: ein Eingriffswinkel, eine Zahnskalierung. Die Drehbewegung kann auch zur Förderung von Fluiden oder zur Profilierung von Plattenstrukturen genutzt werden. Das strukturierte Maschinenelement kann insbesondere auch eine Riffelwalze sein, die beispielsweise zur Herstellung von Wellpappe genutzt wird.

Somit ändern sich die/der Geometrieparameter entlang eines Umlaufes, wobei die Anzahl und der Grad der Änderungen frei wählbar sind und von einer gewünschten Geräuschformung abhängt.

Das beispielhafte Zahnrad verursacht unter anderem in Abhängigkeit von einer Umdrehungszahl und von der Anzahl an Zähnen bei einem Eingriff mit einem anderen Zahnrad ein Geräusch. Bei konventionellen Zahnrädern ergibt sich ein stark tonaler Geräuschcharakter, der von periodisch eingreifenden Zähnen herrührt. Dieser tonale Geräuschcharakter wird gemäß der vorliegenden Erfindung gezielt durch eine Unterbrechung der Periodizität an den Zahnelementen gemindert. Durch die Unterbrechung der Periodizität werden während des Betriebes Töne in einem breiten Frequenzbereich angeregt - und nicht nur in einem eng begrenzten Frequenzbereich, wie es bei konventionellen Zahnrädern der Fall ist. Dadurch wird der störende tonale Geräuschcharakter unterdrückt.

Im Rahmen der vorliegenden Erfindung sollen die Begriffe Zahnskalierung und Eingriffswinkel wie folgt definiert sein. Bei einem Ändern einer Zahnskalierung werden von einem Skalierungsursprung aus die charakteristischen Punkte des Zahnes um einen Skalierungsfaktor im Stirnschnitt weiter auseinander oder zusammen bewegt (z. B. verdoppeln sich die Entfernungen zum Skalierungsursprung bei einem Skalierungsfaktor von 2). Zu den charakteristischen Punkten gehören die Ursprungspunkte der Evolventen der Zahnflanken sowie alle Punkte des Zahnkopfes. Der Verlauf der Krümmung der Evolventen der Zahnflanken entspricht dabei erfindungsgemäß dem der unskalierten Zahnflanke, um das Verzahnungsgesetz weiterhin einzuhalten. Der Skalierungsursprung, von dem aus die Skalierung durchgeführt wird, befindet sich im Schnittpunkt zwischen Grundkreis und Zahnmittellinie. Um die Zähne trotz Zahnskalierung in einem sicheren Eingriff zu halten (unter der Annahme, dass sich der Achsabstand nicht ändert), werden die Skalierungen auf dem gegenüberliegenden verzahnten Maschinenelement so gewählt, dass ein störungsfreier und kontinuierlicher Zahneingriff sichergestellt ist. Der Eingriffswinkel definiert den Winkel der Kraftrichtung in Bezug zur Orthogonalen der Verbindungslinie beider Zahnradmittelpunkte, wobei die Kraft an den Berührungspunkten zwischen den verzahnten Maschinenelementen bei der Übertragung der Drehbewegung von einem Zahnrad auf das andere Zahnrad wirkt.

Optional kann neben einer globalen Zahnskalierung, bei der wie oben beschrieben die Skalierung aller charakteristischen Punkte mit dem gleichen Zahnskalierungsfaktor erfolgt, auch eine lokale Zahnskalierung, also mit sich unterscheidenden Skalierungsfaktoren für die charakteristischen Punkte, ausgehend vom gemeinsamen Skalierungsursprung, erfolgen, wodurch ein verzerrtes Zahnelement entsteht.

Optional ändern sich die Geometrieparameter entlang eines Umlaufes der Verzahnung abschnittsweise, sodass für mehrere aufeinanderfolgende Abschnitte oder Zahnelemente die Geometrieparameter oder deren Abfolge an den Zahnelementen gleich bleiben können. Ein Abschnitt umfasst eine Abfolge von mehreren Zahnelementen, die jeweils durch geänderte Geometrieparameter gekennzeichnet sein können und sich mehrfach über dem Umfang des verzahnten Maschinenelementes wiederholen können. Die einzelnen Zahnelemente können auch über einen bestimmten Winkelabschnitt des beispielhaften Zahnrades gleiche Geometrieparameter aufweisen (bis auf tolerierbare statistische Schwankungen). Zum Beispiel kann sich ein gleich aufgebauter Abschnitt zweimal, dreimal, viermal, ... über dem Umfang wiederholen. Es soll jedoch nicht ausgeschlossen werden, dass jeder Zahn selbst einen anderen Geometrieparameter aufweist. Die Anzahl der Änderungen (Häufigkeit) oder auch der Grad der Änderung kann beispielsweise derart gewählt werden, dass die tonale Komponente eines bei der Übertragung der Drehbewegung entstehenden Geräusches ausreichend gemindert wird. In welchem Umfang dabei die Geometrieparameter zu ändern sind oder in welcher Abfolge sie zu ändern sind, hängt stark sowohl von dem gewählten Einsatzgebiet (z. B. der Umdrehungszahl, dem Betrag des zu übertragenden Drehmomentes und anderen Parametern) als auch von dem gewählten Getriebeaufbau (Stirnrad, Kegelrad, ...) oder der Verzahnungsart ab (Schrägverzahnung, Geradverzahnung, Pfeilverzahnung, ...).

Optional umfassen die Geometrieparameter, die, wie gesagt, zahnindividuell unregelmäßig ausgeführt sein können, außerdem zumindest einen der folgenden Parameter: eine Zahndicke, eine Zahnposition, eine Zahnhöhe, eine Zahnlückengrundtiefe, eine Breitenkorrektur, eine Breitenballigkeit, eine Schrägungswinkelkorrektur, eine Endrücknahme, eine Profilhöhenkorrektur, eine Höhenballigkeit, eine Profilwinkelkorrektur, eine Kopfrücknahme, eine Fußrücknahme, eine Profilkorrektur, eine Verschränkung.

Optional umfasst die umlaufende Verzahnung eine oder mehrere der folgenden Verzahnungen: eine Geradverzahnung, eine Schrägverzahnung, eine Innenverzahnung, eine Außenverzahnung, eine Hypoidverzahnung, eine Pfeilverzahnung, eine Evolventenverzahnung, eine Zykloidenverzahnung, eine Kreisbogenverzahnung und/oder eine Triebstockverzahnung.

Optional umfasst das Maschinenelement ein Metall oder ein Kunststoffmaterial. Das Maschinenelement kann durch zumindest eines der folgenden Verfahren hergestellt worden sein: Gießen, Sintern, selektives Laserschmelzen, 3D-Druck oder ein anderes additives Fertigungsverfahren unter Nutzung eines Kunststoffes, eines Metalls oder einer Metalllegierung. Es kann somit aus Gussmaterial, Sintermaterial etc. gefertigt sein.

Die vorliegende Erfindung bezieht sich auch auf ein Zahnradgetriebe mit einem ersten zuvor definierten, verzahnten Maschinenelement und zumindest einem zweiten zuvor definierten, verzahnten Maschinenelement. Das erste verzahnte Maschinenelement und das zweite verzahnte Maschinenelement stehen in Eingriff, um eine Drehbewegung und somit ein Drehmoment zu übertragen. Der zumindest eine Geometrieparameter ändert sich entlang eines Umlaufes, um tonale Komponenten eines durch die Drehbewegung entstehenden Geräuschs zu mindern.

Die entlang des Umfangs abweichenden Geometrieparameter des ersten verzahnten Maschinenelements und des zweiten verzahnten Maschinenelements sind wechselseitig so ausgestaltet, dass (im Rahmen der technischen und physikalischen Möglichkeiten) ein störungsfreier Zahneingriff und eine kontinuierliche Übertragung von Drehbewegungen und Drehmomenten möglich sind.

Optional ist das Zahnradgetriebe ein Stirnradgetriebe, ein Kegelradgetriebe, ein Kegel-Stirnradgetriebe, ein Hypoidgetriebe, ein Schneckengetriebe, ein Schnecken-Stirnradgetriebe, ein Schraubradgetriebe, ein Hyperboloidgetriebe, ein Kronenradgetriebe oder ein Planetengetriebe.

Optional umfassen das erste verzahnte Maschinenelement und das zweite verzahnte Maschinenelement jeweils mindestens eine Montagemarkierung, um bei einer Montage eine relative Ausrichtung des ersten zum zweiten verzahnten Maschinenelementes zu ermöglichen. Damit kann sichergestellt werden, dass beide Maschinenelemente problemlos ineinandergreifen.

Die vorliegende Erfindung bezieht sich auch auf eine Zahnradpumpe mit einem Zahnradgetriebe, wie es zuvor definiert wurde. Die Zahnradpumpe kann eine Außenzahnradpumpe oder eine Innenzahnradpumpe sein.

Ausführungsbeispiele sind überall dort vorteilhaft einsetzbar, wo unregelmäßige Zahnanordnungen zum Einsatz kommen können und wo Menschen den Geräuschen ausgesetzt sind. Dies umfasst beispielsweise die folgenden Einsatzgebiete:

- Elektromobilität: Der Triebstrang von Elektrofahrzeugen ist durch den Wegfall des Verbrennungsmotors bereits erheblich leiser. Dadurch treten die Getriebegeräusche in den Vordergrund. Die Problematik des Getriebeheulens im Fahrzeugtriebstrang ist dabei ein großes Problem. Dieses Problem kann, unter Berücksichtigung von Verschleiß- und Wirkungsgradeffekten, durch Ausführungsbeispiele mit einer erfindungsgemäßen Verzahnung vermindert werden.
- Robotik: Im Rahmen der Mensch-Roboter-Kollaboration werden in naher Zukunft viele Menschen in ihrem beruflichen wie auch privaten Umfeld mit Robotern zusammenarbeiten. Die meisten Antriebselemente in Robotern bestehen aus Elektromotoren mit Zahnradgetrieben, welche störenden und eventuell sogar gesundheitsschädlichen Lärm erzeugen. Diese Geräusche können durch die Erfindung gemindert werden.
- Haushaltsgeräte ("weiße Ware"): Auch bei Haushaltsgeräten werden leise Produkte zunehmend wichtig. Alle Haushaltsgeräte mit eingebauten Zahnradgetrieben (Handrührer, Mixer, Kaffeevollautomaten, Küchenmaschinen, ...) können durch eine erfindungsgemäße Verzahnung in ihrer Lautstärke verringert werden.

Kurzbeschreibung der Figuren

Die Ausführungsbeispiele der vorliegenden Erfindung werden besser verstanden anhand der folgenden detaillierten Beschreibung und der beiliegenden Zeichnungen für die unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1    zeigt eine Prinzipskizze einer unregelmäßigen Verzahnung, die durch unregelmäßig gewählte Eingriffswinkel gemäß eines Ausführungsbeispiels der vorliegenden Erfindung erzeugt wurde.

Fig. 2    zeigt zwei Zahnradpaarungen, die sich nur in ihrem Eingriffswinkel unterscheiden; links mit einem kleineren Eingriffswinkel, rechts mit einem größeren Eingriffswinkel.

Fig. 3A    zeigt zwei Zahnradpaarungen, die sich nur in der gewählten Zahnskalierung unterscheiden; links kleinere Zahnskalierung des linken Zahnrades, rechts: größere Zahnskalierung des linken Zahnrades.

Fig. 3B    zeigt eine erfindungsgemäße globale Zahnskalierung, bei der die charakteristischen Punkte mit dem gleichen Skalierungsfaktor skaliert werden.

Fig. 3C    zeigt eine erfindungsgemäße lokale Zahnskalierung, bei der die charakteristischen Punkte mit unterschiedlichen Skalierungsfaktoren skaliert werden.

Fig. 4    zeigt eine Prinzipskizze einer unregelmäßigen Verzahnung, die gemäß der Erfindung durch unregelmäßig gewählte Zahnskalierungen erzeugt wurde.

Fig. 5    zeigt Darstellungen des experimentell ermittelten Schalldruckpegels, der psychoakustischen Lautheit und der psychoakustischen Lästigkeit über der Drehzahl für eine konventionelle Verzahnung und eine erfindungsgemäß unregelmäßig ausgestaltete Verzahnung.

Fig. 6    zeigt ein erfindungsgemäßes Zahnradgetriebe, wobei ein erstes Zahnrad einen geringeren Durchmesser und weniger Zähne als ein zweites Zahnrad aufweist.

Fig. 7A,7B    zeigen schematische Darstellungen einer als Außenzahnradpumpe (Fig. 7A) und Innenzahnradpumpe (Fig. 7B) ausgebildeten Zahnradpumpe mit einem erfindungsgemäßen Zahnradgetriebe, wobei beide Ausführungen ein abweichend ausgebildetes, ebenfalls erfindungsgemäßes Zahnradgetriebe aufweisen.

Detaillierte Beschreibung

Im Folgenden soll dargestellt werden, wie die Unterbrechung einer periodischen Anregung auf beliebige Zahnräder übertragen werden kann. Prinzipiell können die Geometrieparameter der Verzahnung für jeden Zahn individuell gewählt werden. Auf den zu paarenden Zahnrädern werden die Veränderungen wechselseitig aufgebracht, sodass ein kontinuierlicher und störungsfreier Zahneingriff möglich wird. Die Übertragung von Drehbewegungen findet mit einem gleichbleibenden Übersetzungsverhältnis statt. Die Zahnform ist beispielhaft als Evolvente ausgeführt.

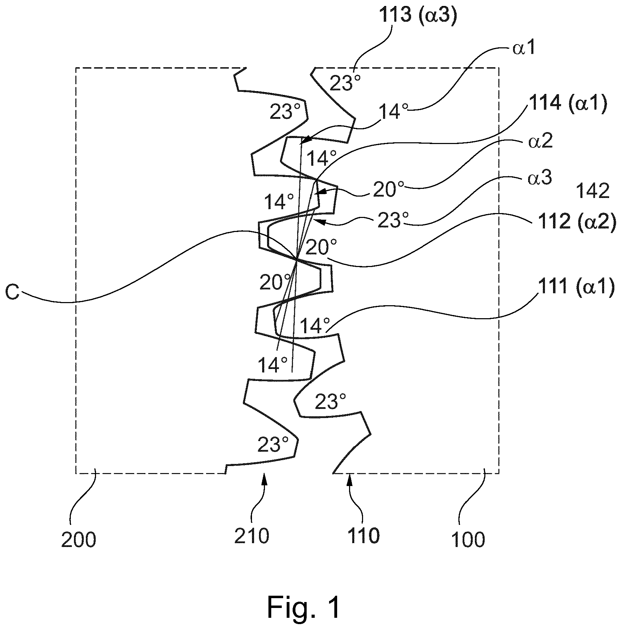

**Fig. 1** zeigt ein Ausführungsbeispiel für ein verzahntes Maschinenelement 100, das im Eingriff steht mit einem weiteren verzahnten Maschinenelement 200. Das verzahnte Maschinenelement 100 umfasst eine umlaufende Verzahnung 110 und das verzahnte Maschinenelement 200 umfasst eine weitere umlaufende Verzahnung 210. Die verzahnten Maschinenelemente 100, 200 sind Zahnräder, wobei eines der beiden Zahnräder das treibende Rad ist und das andere das getriebene Rad.

Gemäß dem gezeigten Ausführungsbeispiel sind die Eingriffswinkel $\alpha$ von Zahn zu Zahn entlang der umlaufenden Verzahnungen 110, 210 verschieden. Beispielsweise umfasst das verzahnte Maschinenelement 100 einen ersten Zahn 111, einen zweiten Zahn 112, einen dritten Zahn 113 und weitere Zahnelemente. Jeder dieser Zähne ist durch den Eingriffswinkel $\alpha$ charakterisiert, wobei beispielhaft jedem Zahn ein Eingriffswinkel von drei möglichen Eingriffswinkeln $\alpha 1$, $\alpha 2$, $\alpha 3$ zugewiesen wird. So umfasst der erste Zahn 111 einen ersten Eingriffswinkel $\alpha 1$ von 14°, der zweite Zahn 112 einen zweiten Eingriffswinkel $\alpha 2$ von 20° und der dritte Zahn 113 einen dritten Eingriffswinkel $\alpha 3$ von 23°. Ein vierter Zahn 114, der zwischen dem zweiten und dem dritten Zahn 112, 113 angeordnet ist, umfasst wiederum einen Eingriffswinkel von 14°. Die Eingriffswinkel $\alpha 1$, $\alpha 2$, $\alpha 3$ zeigen die Richtung der Kraftübertragung entlang der Eingriffsstrecke an, welche durch den Wälzpunkt C geht, und werden gegen eine Orthogonale zur Verbindungslinie zwischen den Mittelpunkten der beiden Zahnräder 100, 200 gemessen.

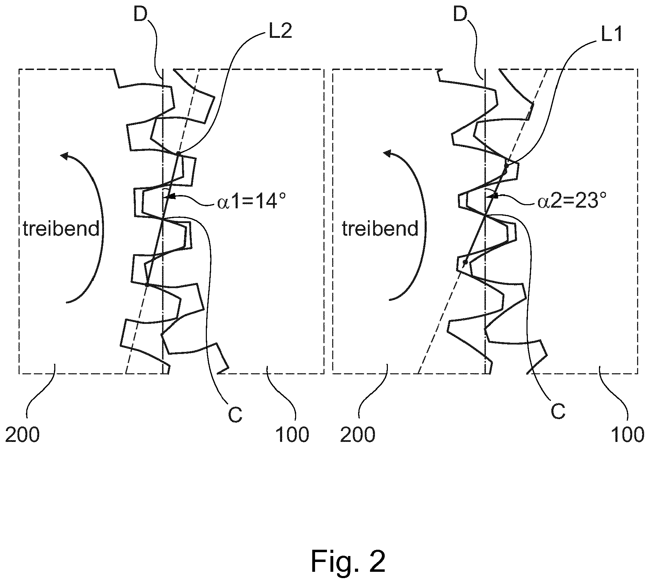

**Fig. 2** veranschaulicht den Effekt, den eine Änderung des Eingriffswinkels $\alpha$ hat, wobei beispielhaft das erste Zahnrad 100 durch das zweite Zahnrad 200 angetrieben wird. Auf der linken Seite ist der Eingriffswinkel $\alpha$ = 14° und auf der rechten Seite ist im Vergleich dazu der Eingriffswinkel $\alpha$ = 23°. Somit ist die Kraftwirkung auf der rechten Seite stärker von einer Mittenlinie D weg geneigt als in dem Beispiel auf der linken Seite. Die Mittenlinie D ist gleichzeitig die Tangente an den Teilkreisen, d. h. sie definiert den Wälzpunkt C auf der Verbindungslinie zwischen den Drehachsen der beiden Zahnräder.

Wie in Fig. 2 weiter dargestellt, ist die Länge der Eingriffsstrecke $L$ abhängig vom Eingriffswinkel $\alpha$. So ist die Eingriffsstrecke für einen kleineren Eingriffswinkel $\alpha$ länger als für einen größeren Eingriffswinkel $\alpha$. Auf der rechten Seite ist eine erste Eingriffsstrecke $L1$ für den Eingriffswinkel $\alpha$ = 23° gezeigt, während auf der linken Seite eine zweite Eingriffsstrecke $L2$ für den Eingriffswinkel $\alpha$ = 14° gezeigt ist. Wie der Darstellung zu entnehmen ist, ist die zweite Eingriffsstrecke $L2$ länger als die erste Eingriffsstrecke $L1$.

Die Eingriffsstrecke $L$ ist dadurch definiert, dass sie die Wegstrecke zeigt, über die die treibende Kraft von dem zweiten Zahnrad 200 auf das erste Zahnrad 100 übertragen wird. Wenn die Eingriffsstrecke L länger ist, sind mehrere Kontaktpunkte gleichzeitig über einen längeren Zeitraum vorhanden, mit denen ein bestimmtes Drehmoment übertragen wird. Das hat zur Folge, dass bei kürzeren Eingriffsstrecken weniger Kontaktpunkte über einen kürzeren Zeitraum vorhanden sind und somit die Kraft an den jeweiligen Kontaktpunkten für ein bestimmtes Drehmoment größer ist als bei einer längeren Eingriffsstrecke L. Dies wiederum hat zur Folge, dass die Kontaktierung bei einer kürzeren Eingriffsstrecke, wie sie auf der rechten Seite der Fig. 2 gezeigt ist, kräftiger erfolgt und somit mit einem anderen Geräusch verbunden ist als auf der linken Seite. Durch eine Variation der Eingriffswinkel $\alpha$ kommt es somit zu einer Geräuschänderung.

Um den Effekt der Änderung der Eingriffswinkel besser verstehen zu können, werden im Folgenden die relevanten Relationen kurz zusammengefasst. Der Eingriffswinkel (oder Stirneingriffswinkel) $\alpha$ einer Verzahnung wirkt sich bei evolventischen Verzahnungen direkt auf den Grundkreisdurchmesser $d_b$ aus:

$$d_\mathrm{b} = d \cdot \cos(\alpha) \,, \qquad\qquad (1)$$

wobei d der Teilkreisdurchmesser ist. Daraus ergibt sich eine unterschiedlich gekrümmte evolventische Zahnflanke in Abhängigkeit vom Eingriffswinkel a. Wie bereits dargelegt, ist in Fig. 2 zu erkennen, dass die zahnindividuellen, unregelmäßigen Eingriffswinkel $\alpha$ unterschiedlich geneigte und unterschiedlich lange Eingriffsstrecken $L$ ergeben. Weiterhin sind die unterschiedlichen Zahngeometrien zu erkennen. Hierdurch ergeben sich unregelmäßige Schwingungs- und Geräuscherregungen, was eine Geräuschminderung bewirkt. Um die Kompatibilität und somit die kontinuierliche, störungsfreie und gleichförmige Übertragung einer Drehbewegung sicherzustellen, wird die Bedingung eingehalten, dass zwei sich berührende, kraftübertragende Zahnflanken auf Basis eines gleichen Eingriffswinkels erstellt wurden:

$$\alpha_{i,1} = \alpha_{i,2}, \qquad\qquad\qquad (2)$$

wobei i für die Nummer der sich berührenden Zahnpaare steht. Prinzipiell ist eine solche Verzahnung mit allen Dreh- und Lastrichtungen kompatibel.

Die Zahnformen (siehe Fig. 1) verändern sich von einer eher rechteckigen Form für kleine Eingriffswinkel $\alpha$ hin zu eher dreieckigen Zahnformen für große Eingriffswinkel a. Es entstehen somit deutliche Unterschiede in der Zahngeometrie und der Länge der Eingriffsstrecke.

Gemäß der Ausführungsbeispiele der vorliegenden Erfindung werden die Zähne derart gewählt oder geändert, dass sich der Eingriffswinkel gezielt von Zahn zu Zahn (oder von einem Zahnabschnitt zu einem weiteren Zahnabschnitt) ändert.

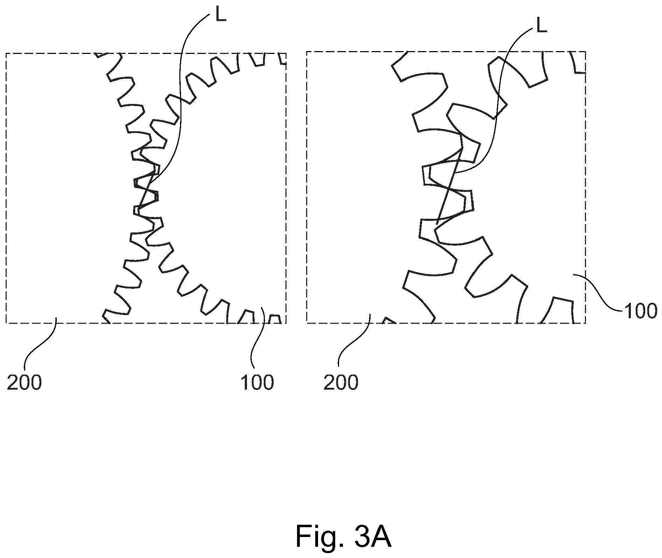

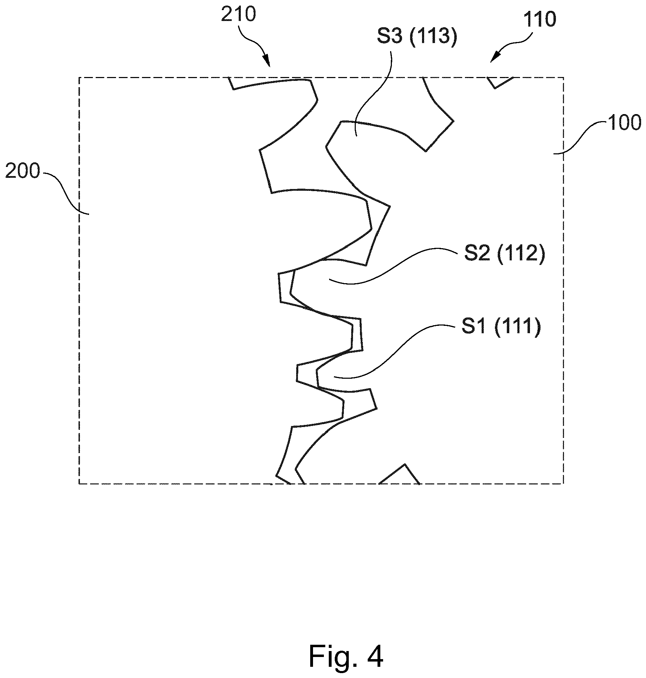

In **Fig. 3A** sind zwei Zahnradpaarungen dargestellt, die sich nur in ihrer Zahnskalierung unterscheiden. Gemäß der Ausführungsbeispiele kann zum Aufbrechen der Periodizität der Geräuschanregung die Zahnskalierung zahnindividuell unregelmäßig gewählt werden. Eine Prinzipskizze hiervon ist in **Fig. 4** dargestellt.

Durch die dadurch verursachten unterschiedlichen Geometrien der einzelnen Zähne ergeben sich unregelmäßige Schwingungs- und Geräuscherregungen, was eine Geräuschminderung bewirkt. Um die Kompatibilität, und somit die kontinuierliche, störungsfreie und gleichförmige Übertragung einer Drehbewegung, sicherzustellen, wird die Bedingung eingehalten, dass der Teilkreisdurchmesser $d$ für alle abschnittsweise unregelmäßig gewählten Zahnskalierungen konstant ist:

$$d = \text{const.} \qquad\qquad\qquad (3)$$

Aus dieser Forderung ergibt sich, dass auch der Grundkreisdurchmesser $d_b$, auf dem die Ursprünge der Evolventenkurven liegen, konstant gewählt wird, sofern der Eingriffswinkel $\alpha$ konstant ist (kann erfindungsgemäß ebenfalls abweichen):

$$d_b = d \cdot \cos(\alpha) = \text{const.} \qquad\qquad\qquad (4)$$

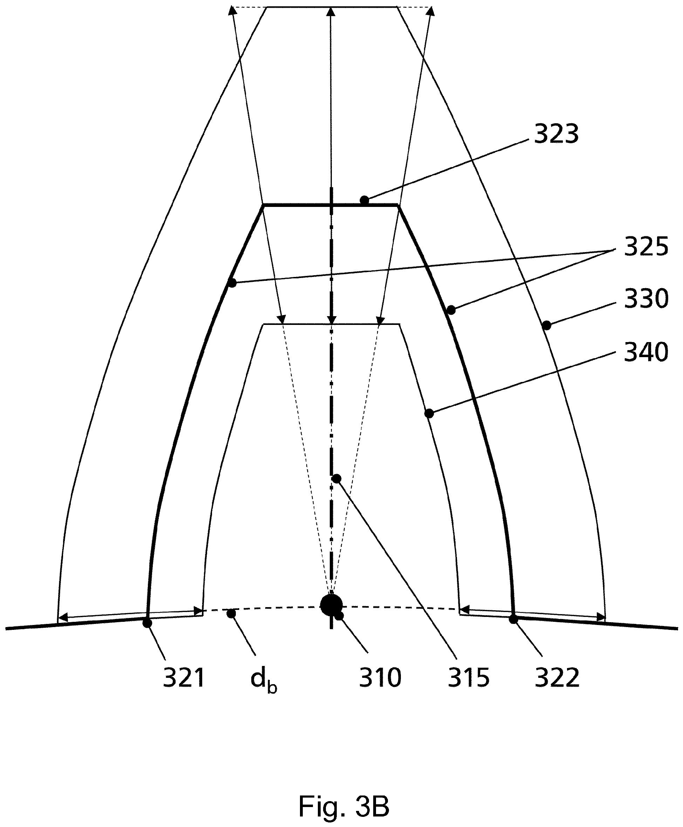

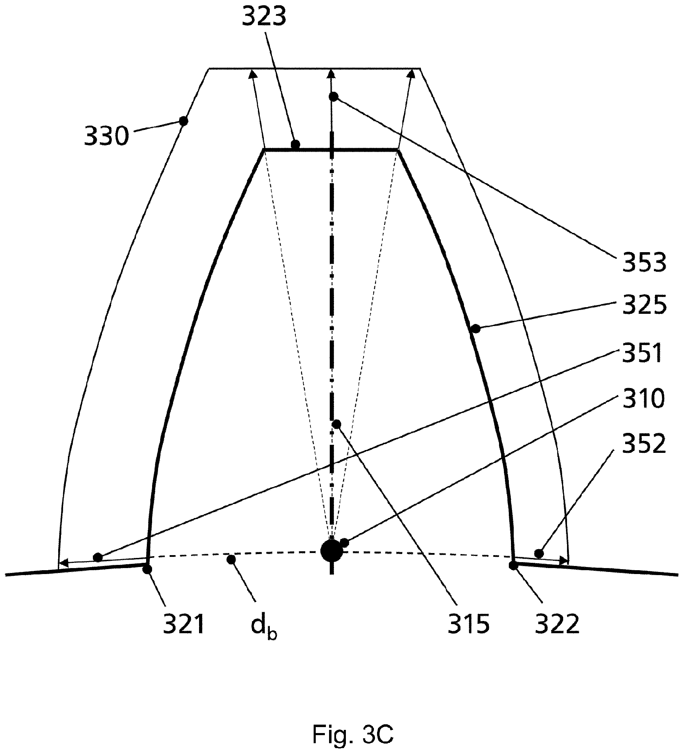

**Fig. 3B,3C** zeigen Ausführungsbeispiele für erfindungsgemäß ausgeführte Zahnskalierungen eines Zahnes.

In Fig. 3B ist eine erfindungsgemäß ausgeführte Zahnskalierung mit globaler Skalierung dargestellt. Ausgehend vom Skalierungsursprung 310, der am Schnittpunkt zwischen Zahnmittellinie 315 und Grundkreis db definiert ist, werden die charakteristischen Punkte mit dem gleichen Skalierungsfaktor im Stirnschnitt skaliert. Zu den charakteristischen Punkten gehören beispielsweise die Ursprungspunkte 321, 322 der Evolventenflanken 325 und alle Punkte des Zahnkopfes 323. Die Ursprungspunkte 321, 322 der Evolventenflanken 325 werden entlang des Grundkreises db und der gesamte Zahnkopf 323 entlang der Verbindungslinien (Zahnmittenlinie 315) zwischen Skalierungsursprung 310 und Zahnkopf 323 global skaliert. Die Zahnskalierung kann den Zahn global vergrößern (Skalierungsfaktor > 1), siehe skalierter Zahn 330, oder global verkleinern (Skalierungsfaktor < 1), siehe skalierter Zahn 340. In Fig. 3B ist der Skalierungsfaktor des größeren Zahnes 330 beispielhaft 1,5 und der des kleineren Zahnes 340 beispielhaft 0,7.

In Fig. 3C ist darüber hinaus eine erfindungsgemäß ausgeführte Zahnskalierung mit lokaler Skalierung dargestellt. Ausgehend vom Skalierungsursprung 310, der am Schnittpunkt zwischen Zahnmittellinie 315 und Grundkreis db zu finden ist, werden die charakteristischen Punkte mit unterschiedlichen Skalierungsfaktoren im Stirnschnitt skaliert. Die Ursprungspunkte 321, 322 der Evolventenflanken 325 werden entlang des Grundkreises db und der gesamte Zahnkopf 323 entlang der Verbindungslinien (Zahnmittenlinie 315) zwischen Skalierungsursprung 310 und Zahnkopf 323 lokal skaliert (d. h. abhängig vom Ort unterschiedlich stark). Die Zahnskalierung kann den Zahn lokal vergrößern (Skalierungsfaktor > 1), siehe skalierter Zahn 330, oder lokal verkleinern (Skalierungsfaktor < 1), nicht gezeigt in Fig. 3C. Bei der gezeigten lokalen Zahnskalierung können beispielsweise die Ursprungspunkte 321, 322 der Evolventenflanken 325 unterschiedlich stark skaliert werden. So kann der linke Ursprungspunkt 321 mit einem größeren Skalierungsfaktor 351 skaliert werden als der rechte Ursprungspunkt 322, der mit einem kleineren Skalierungsfaktor 352 skaliert wird. In der Fig. 3C ist der Skalierungsfaktor 353 am Zahnkopf beispielhaft 1,2, der Skalierungsfaktor 351 an der linken Flanke ist beispielhaft 1,5 und der Skalierungsfaktor 352 an der rechten Flanke ist 1,3.

Es versteht sich von selbst, dass die gezeigten Skalierungsfaktoren lediglich Beispiele darstellen und bei weiteren Ausführungsbeispielen anders gewählt sein können.

**Fig. 4** zeigt ein Ausführungsbeispiel mit einem ersten Zahnrad 100 und einem zweiten Zahnrad 200, die miteinander im Eingriff stehen, wobei entlang der umlaufenden Verzahnungen 110, 210 die Zahnskalierung geändert wurde. Das erste Zahnrad 100 umfasst einen ersten Zahn 111 mit einer ersten Zahnskalierung S1, einen zweiten Zahn 112 mit einer zweiten Zahnskalierung S2 und einen dritten Zahn 113 mit einer dritten Zahnskalierung S3. Die Skalierungsfaktoren sind so gewählt, dass der erste Zahn 111 am kleinsten ist und der dritte Zahn 113 am größten, die Größe des zweiten Zahnes liegt zwischen der des ersten Zahnes 111 und der des dritten Zahnes 113. Gleiches gilt entsprechend für das weitere Zahnrad 200.

Die Skalierungen der Zähne 111, 112, ... werden gemäß den Ausführungsbeispielen bezogen auf den Skalierungsursprung im Stirnschnitt durchgeführt, der im Schnittpunkt von Zahnmittellinie 315 und Grundkreis db zu finden ist. Um zu verhindern, dass sich die Zahnräder gegenseitig blockieren, kann die Zahnlücke des gegenüberliegenden Zahnrades unter Umständen angepasst werden - zumindest wenn größere Skalierungen gewählt werden.

Die Skalierung hat zur Folge, dass die Teilkreisdurchmesser, die Grundkreisdurchmesser und der Wälzpunkt C selbst dadurch nicht geändert werden. Es ändert sich lediglich die Skalierung der jeweiligen Zähne.

Wie auch in dem Ausführungsbeispiel der Fig. 1 bewirkt die Änderung der Zahnskalierung nicht, dass der Wälzpunkt C periodisch geändert wird. Vielmehr bewirkt die Änderung der Zahnskalierung lediglich, dass die Zeitpunkte, zu denen die Zähne in Kontakt gelangen, und die Steifigkeiten der sich im Eingriff befindlichen Zahnpaare sich entlang der umlaufenden Verzahnungen 110, 210 ändern. Hierdurch kann das Geräusch gezielt geändert (gestaltet) werden.

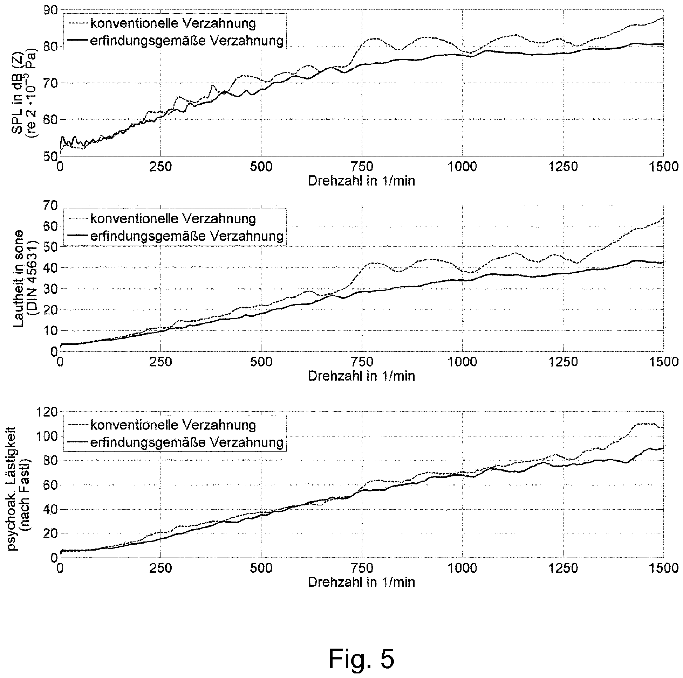

**Fig. 5** zeigt Ergebnisse von experimentellen Tests einer konventionellen Verzahnung und einer erfindungsgemäß ausgeführten Verzahnung. Es ist zu erkennen, dass die erfindungsgemäß unregelmäßig ausgeführte Verzahnung (durchgezogene Linie) über nahezu alle Drehzahlen hinweg einen niedrigeren Schalldruckpegel, eine niedrigere psychoakustische Lautheit und eine niedrigere psychoakustische Lästigkeit erzeugt als eine konventionelle Verzahnung (gestrichelte Linie).

Ausführungsbeispiele der Erfindung sind prinzipiell überall einsetzbar, wo auch konventionelle Verzahnungen zum Einsatz kommen.

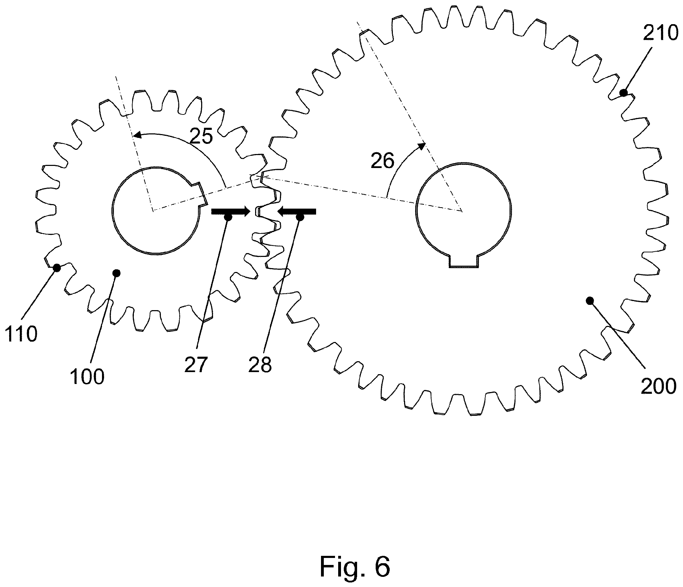

**Fig. 6** zeigt beispielhaft ein erfindungsgemäßes Zahnradgetriebe mit einem kleinen ersten Zahnrad 100 und mit einem größeren zweiten Zahnrad 200. Das kleine erste Zahnrad 100 weist 24 Zähne auf, wobei sich ein Zahnradabschnitt 25 mit 6 Zähnen der umlaufenden Verzahnung 110 vier Mal wiederholt. Das große zweite Zahnrad 200 weist 42 Zähne auf, wobei sich ein Zahnradabschnitt 26 mit ebenfalls 6 Zähnen der umlaufenden Verzahnung 210 sieben Mal wiederholt. Jedes Zahnrad 100, 200 weist jeweils eine Montagemarkierung 27, 28 auf, die eine bevorzugte Ausrichtung der beiden Zahnräder 100, 200 in Umfangsrichtung zueinander vorgibt. Die beiden Zahnradabschnitte 25, 26 sind so ausgebildet und die beiden Zahnräder 100, 200 bei Beachtung der Montagemarkierungen 27, 28 so zueinander ausgerichtet, dass die beiden Zahnräder 100, 200 bei einer Drehbewegung mit einer sich jeweils wiederholenden Abfolge der jeweiligen Zahnradabschnitte 25, 26 ungehindert ineinandergreifen.

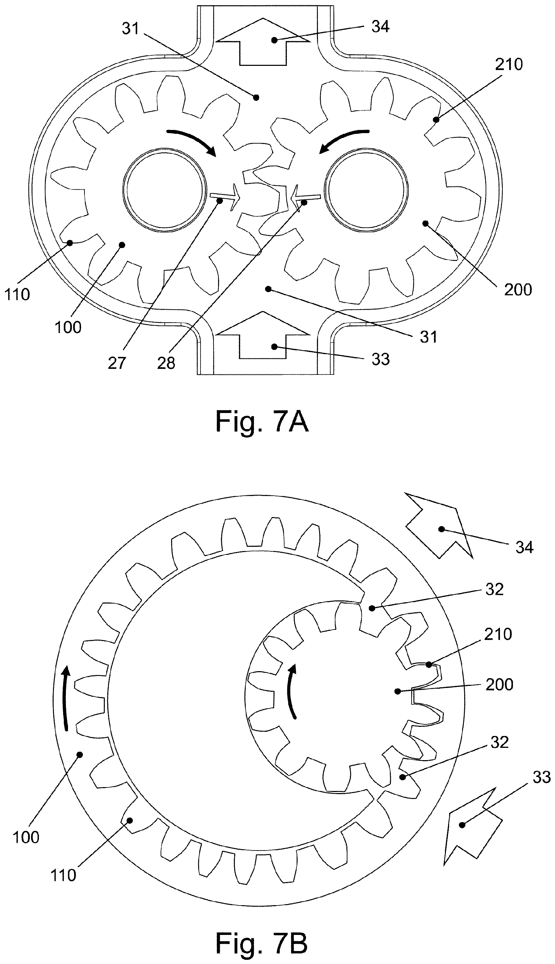

In **Fig. 7A** ist exemplarisch eine erfindungsgemäße Außenzahnradpumpe und in **Fig. 7B** ist eine erfindungsgemäße Innenzahnradpumpe schematisch abgebildet. Die beiden Zahnradpumpen weisen jeweils ein erstes Zahnrad 100 und ein zweites Zahnrad 200 auf, die während des Betriebes rotieren, wobei die jeweiligen umlaufenden Verzahnungen 110, 210 ineinandergreifen. Ein den Zahnradpumpen zugeführtes Fluid wird dadurch in einem Innenraum 31, 32 der Zahnradpumpen verdrängt und von einer Fluidzuführung 33 zu einem Fluidauslass 34 gefördert. Durch die jeweils ungleichmäßig, aber für einen ungehinderten Eingriff miteinander ausgebildeten Verzahnungen 110, 210 werden periodische Schwingungen und Fluidpulsationen unterdrückt und die subjektive Lästigkeit der Betriebsgeräusche während des Betriebs der Außenzahnradpumpe oder der Innenzahnradpumpe erheblich reduziert.

Weitere Ausführungsbeispiele beziehen sich auf die folgenden Gegenstände:
Ein verzahntes Maschinenelement zur Übertragung von Drehbewegungen und/oder Drehmomenten, dadurch gekennzeichnet, dass es mindestens 2 Zahnelemente aufweist und mit einem weiteren verzahnten Maschinenelement im Eingriff steht. Die Verzahnungen der verzahnten Maschinenelemente sind so ausgeführt, dass sie mindestens zwei verschiedene Zahnskalierungen und/oder zwei verschiedene Eingriffswinkel $\alpha$ aufweisen, die für jeden Zahn individuell gewählt werden können, sich jedoch auch abschnittsweise wiederholen können oder unregelmäßig angeordnet sein können. Weiterhin sind die Verzahnungen der in Paarung stehenden verzahnten Maschinenelemente so ausgeführt, dass sie einander wechselseitig angepasst sind und so eine kontinuierliche, störungsfreie und gleichförmige Übertragung der Drehbewegung erlauben.

Die Unregelmäßigkeiten der Verzahnung werden über zahnindividuelle Zahnskalierungen und zahnindividuelle Eingriffswinkel erzielt. Das resultierende Geräusch wird von Menschen daher als weniger lästig empfunden. Die Unregelmäßigkeit kann insbesondere bedeuten, dass die Zähne ungleichmäßig, unregelmäßig, irregulär, inkonstant, veränderlich, wechselnd, ungleich, abweichend, unterschiedlich, verschiedenartig, ungleichartig, different, unähnlich, divergierend, inkongruent sind. Daher sind die Zähne ganz bewusst nicht deckungsgleich. Der Begriff "Zahnskalierung" bezieht sich im Rahmen der vorliegenden Erfindung insbesondere auf zumindest einen der folgenden Parameter: Zahnvergrößerungsfaktor, Verzahnungsvergröbrung, Zahngrößenänderungsfaktor, Zahnausmaß, Zahndimensionierung, Zahnformat, Zahnabmessung, Zahnausdehnung.

Weiterhin soll eine Kombination der beschriebenen Parameter auch mit anderen Möglichkeiten einer unregelmäßigen Ausgestaltung mit umfasst sein (unregelmäßige Zahndicken, Zahnpositionen, Zahnhöhen und Zahnlückengrundtiefen). Weitere Ausführungsbeispiele beziehen sich daher auch auf ein verzahntes Maschinenelement, dadurch gekennzeichnet, dass die Unregelmäßigkeit der Verzahnung durch weitere Parameter (unregelmäßige Zahndicken, Zahnpositionen, Zahnhöhen und Zahnlückengrundtiefen) erweitert wird.

Die Erfindung ist unabhängig von einer Gerad-, Schräg-, Innen-, Außen-, Hypoid- oder Pfeilverzahnung. Weitere Ausführungsbeispiele beziehen sich daher auch auf ein verzahntes Maschinenelement, dadurch gekennzeichnet, dass die Verzahnung als Gerad-, Schräg-, Hypoid- oder Pfeilverzahnung ausgeführt ist.

Auch alle anderen Zahnmodifikationen (Kopfrücknahme, Balligkeit, ...) sind mit der Erfindung kompatibel. Weitere Ausführungsbeispiele beziehen sich daher auch auf ein verzahntes Maschinenelement mit Zahnmodifikationen wie z. B. Breitenkorrektur, Breitenballigkeit, Schrägungswinkelkorrektur, Endrücknahme, Profilhöhenkorrektur, Höhenballigkeit, Profilwinkelkorrektur, Kopfrücknahme, Fußrücknahme, Profilkorrektur, Verschränkung.

Weiterhin soll die Erfindung nicht nur Evolventenverzahnungen umfassen, sondern auch andere Zahngeometrien (Zykloidenverzahnung, ...). Weitere Ausführungsbeispiele beziehen sich daher auch auf ein verzahntes Maschinenelement, wobei die Verzahnung als Evolventenverzahnung, Zykloidenverzahnung, Kreisbogenverzahnungen oder Triebstockverzahnungen ausgeführt ist.

Auch die Getriebebauform (Stirnradgetriebe, Planetengetriebe, ...) kann beliebig sein. Weitere Ausführungsbeispiele beziehen sich daher auch auf ein verzahntes Maschinenelement, wobei es als Stirnradgetriebe, Kegelradgetriebe, Kegel-Stirnradgetriebe, Schneckengetriebe, Schnecken-Stirnradgetriebe, Schraubradgetriebe, Hyperboloidgetriebe, Kronenradgetriebe, Planetengetriebe oder Hypoidgetriebe ausgeführt ist.

Die in der Beschreibung, den Ansprüchen und den Figuren offenbarten Merkmale der Erfindung können sowohl einzeln als auch in beliebiger Kombination für die Verwirklichung der Erfindung wesentlich sein.

Bezugszeichenliste

| | |
|---|---|
| 25, 26 | Zahnradabschnitt(e) |
| 27, 28 | Montagemarkierung(en) |
| 31, 32 | Innenraum einer Pumpe |
| 33 | Fluidzufluss |
| 34 | Fluidabfluss |
| 100, 200 | verzahnte Maschinenelemente (z. B. Zahnräder) |
| 110, 210 | umlaufende Verzahnungen |
| 111, 112, .. 211, 212, .. | Zähne der Zahnräder |
| 310 | Skalierungsursprung |
| 315 | Zahnmittellinie |
| 321, 322 | Ursprungspunkte der Evolventenflanken |
| 323 | Zahnkopf |
| 325 | Evolventenflanken |
| 330, 340 | skalierte Zähne |
| 351, 352, 353 | Skalierungsfaktoren |
| $\alpha$ | Eingriffswinkel |
| S | Zahnskalierung |
| C | Wälzpunkt |
| L1, L2 | Eingriffsstrecken |
| $d_b$ | Grundkreis |
| D | Orthogonale zur Verbindungslinie beider Zahnradmittelpunkte |

**Patentansprüche**

1. Verzahntes oder strukturiertes Maschinenelement (100) zur Übertragung von Drehbewegungen, mit folgenden Merkmalen:

eine umlaufende Verzahnung (110) mit mehreren Zahnelementen (111, 112, ...), um ein weiteres verzahntes Maschinenelement (200) in Eingriff zu nehmen und dadurch die Übertragung der Drehbewegung auf das weitere Maschinenelement (200) zu ermöglichen,

wobei die mehreren Zahnelemente (111, 112, ...) durch Geometrieparameter ($\alpha$, S) gekennzeichnet sind und mindestens ein Zahnelement (111) aus den mehreren Zahnelementen in mindestens einem der folgenden Geometrieparameter ($\alpha$, S) sich von anderen Zahnelementen (112, 113) aus den mehreren Zahnelementen unterscheidet: ein Eingriffswinkel ($\alpha$), eine Zahnskalierung (S),

**dadurch gekennzeichnet, dass**

die Zahnelemente (111, 112, ...) durch charakteristische Punkte (321, 322, 323) gekennzeichnet sind und mindestens eines der Zahnelemente (111) aus den mehreren Zahnelementen mit mindestens zwei sich unterscheidenden lokalen Skalierungsfaktoren (351, 352, 353) so skaliert ist, dass die charakteristischen Punkte (321, 322, 323) unterschiedlich skaliert werden und ein verzerrtes Zahnelement (330, 340) entsteht.

2. Maschinenelement nach Anspruch 1, wobei sich die Geometrieparameter ($\alpha$, S) entlang eines Umlaufes der Verzahnung (110) abschnittsweise ändern, sodass für mehrere aufeinanderfolgende Abschnitte die Abfolge der Geometrieparameter ($\alpha$, S) an den Zahnelementen gleich bleibt.

3. Maschinenelement (100) nach einem der vorhergehenden Ansprüche, wobei die Geometrieparameter ($\alpha$, S) außerdem zumindest einen der folgenden Parameter umfassen: eine Zahndicke, eine Zahnposition, eine Zahnhöhe, eine Zahnlückengrundtiefe, eine Breitenkorrektur, eine Breitenballigkeit, eine Schrägungswinkelkorrektur, eine Endrücknahme, eine Profilhöhenkorrektur, eine Höhenballigkeit, eine Profilwinkelkorrektur, eine Kopfrücknahme, eine Fußrücknahme, eine Profilkorrektur, eine Verschränkung.

4. Maschinenelement (100) nach einem der vorhergehenden Ansprüche, wobei die umlaufende Verzahnung (110) mindestens eine der folgenden Verzahnungen ist: eine Geradverzahnung, eine Schrägverzahnung, eine Hypoidverzahnung, eine Pfeilverzahnung, eine Evolventenverzahnung, eine Zykloidenverzahnung, eine Kreisbogenverzahnung, eine Triebstockverzahnung, eine Innenverzahnung, eine Außenverzahnung.

5. Maschinenelement (100) nach einem der vorhergehenden Ansprüche, das ein Metall- oder ein Kunststoffmaterial aufweist und/oder durch zumindest eines der folgenden Verfahren hergestellt wurde: Gießen, Sintern, selektives Laserschmelzen, 3D-Druck oder ein anderes additives Fertigungsverfahren unter Nutzung eines Kunststoffes, Metalls oder einer Metalllegierung.

6. Zahnradgetriebe mit:

einem ersten verzahnten Maschinenelement (100) nach einem der Ansprüche 1 bis 5; und zumindest einem zweiten verzahnten Maschinenelement (200) nach einem der Ansprüche 1 bis 5, wobei das erste verzahnte Maschinenelement (100) und das zweite verzahnte Maschinenelement (200) in Eingriff stehen, um eine Drehbewegung zu übertragen, und der zumindest eine Geometrieparameter ($\alpha$, S) entlang eines Umlaufes sich ändert, um tonale Komponenten eines durch die Drehbewegung entstehenden Geräuschs zu mindern.

7. Zahnradgetriebe nach Anspruch 6, wobei die entlang des Umfangs abweichenden Geometrieparameter ($\alpha$, S) des ersten verzahnten Maschinenelements (100) und des zweiten verzahnten Maschinenelements (200) wechselseitig so ausgestaltet sind, dass ein störungsfreier Zahneingriff und eine kontinuierliche Übertragung von Drehbewegungen und Drehmomenten möglich ist.

8. Zahnradgetriebe nach Anspruch 6 oder Anspruch 7, wobei das Zahnradgetriebe ein Stirnradgetriebe, ein Kegelradgetriebe, ein Kegel-Stirnradgetriebe, ein Hypoidgetriebe, ein Schneckengetriebe, ein Schnecken-Stirnradgetriebe, ein Schraubradgetriebe, ein Hyperboloidgetriebe, ein Kronenradgetriebe oder ein Planetengetriebe ist.

9. Zahnradgetriebe nach einem der Ansprüche 6 bis 8, wobei das erste verzahnte Maschinenelement (100) und das zweite verzahnte Maschinenelement (200) jeweils mindestens eine Montagemarkierung (27, 28) aufweisen, um bei einer Montage eine relative Ausrichtung des ersten und zweiten verzahnten Maschinenelementes (100, 200) zu ermöglichen.

10. Zahnradpumpe mit einem Zahnradgetriebe nach einem der Ansprüche 7 bis 9.

11. Zahnradpumpe nach Anspruch 10, die als Außenzahnradpumpe oder als Innenzahnradpumpe ausgebildet ist.


**Claims**

1. Toothed or structured machine element (100), in particular a gearwheel, for transmitting rotational movements, with the following features:

   a peripheral tooth system (110) having a plurality of tooth elements (111, 112, ...) in order to engage with a further toothed machine element (200) and thereby to permit the transmission of the rotational movement to the further machine element (200),
   wherein the plurality of tooth elements (111, 112, ...) are **characterized by** geometry parameters ($\alpha$, $S$), and at least one tooth element (111) of the plurality of tooth elements differs in at least one of the following geometry parameters ($\alpha$, $S$) from other tooth elements (112, 113) from the plurality of tooth elements: an engagement angle ($\alpha$), a tooth scale ($S$),
   **characterized in that**
   the tooth elements (111, 112, ...) are **characterized by** characteristic points (321, 322, 323), and at least one tooth element (111) from the plurality of tooth elements is scaled with at least two differing local scale factors (351, 352, 353) in such a way that the characteristic points (321, 322, 323) are scaled differently and a distorted tooth element is generated.

2. Machine element according to claim 1, wherein the geometry parameters ($\alpha$, $S$) change in sections along a circumference of the tooth system (110), such that for several successive sections the sequence of geometry parameters ($\alpha$, $S$) of the tooth elements remains the same.

3. Machine element (100) according to one of the preceding claims, wherein the geometry parameters ($\alpha$, $S$) further comprise at least one of the following parameters: a tooth thickness, a tooth position, a tooth height, a tooth gap root depth, a width correction, a width crowning, a helix angle correction, an end relief, a profile height correction, a height crowning, a profile angle correction, a tip relief, a fillet relief, a profile correction, a profile offset.

4. Machine element (100) according to one of the preceding claims, wherein the peripheral toothing (110) is at least one of the following toothings: a straight-cut toothing, a helical toothing, a hypoid toothing, an herringbone toothing, an involute toothing, a cycloid toothing, a circular arc toothing, a lantern gear toothing, an internal toothing, an external toothing.

5. Machine element (100) according to one of the preceding claims, which comprises a metal or a plastic material and/or has been produced through at least one of the following processes: casting, sintering, selective laser melting, 3D printing or another additive manufacturing method using a plastic, metal, or a metal alloy.

6. Gear transmission with:

   a first toothed machine element (100) according to one of the claims 1 to 5; and
   at least one second toothed machine element (200) according to one of the claims 1 to 5,
   wherein the first toothed machine element (100) and the second toothed machine element (200) are in engagement in order to transmit a rotational movement, and the at least one geometry parameter ($\alpha$, $S$) changes along a circumference in order to reduce tonal components of a noise produced by the rotational motion.

7. Gear transmission according to claim 6, wherein the geometry parameters ($\alpha$, $S$) of the first toothed machine element (100) and the second toothed machine element (200) differing along the circumference are mutually configured in such a way that a failure-free tooth engagement and a continuous transmission of rotational movements and torques is possible.

8. Gear transmission according to claim 6 or claim 7, wherein the gear transmission is a spur gear transmission, a bevel gear transmission, a bevel-spur gear transmission, a hypoid gear transmission, a worm gear transmission, a worm-spur gear transmission, a helical gear transmission, a hyperboloid gear transmission, a crown gear transmission or a planetary gear transmission.

9. Gear transmission according to one of the claims 6 to 8, wherein the first toothed machine element (100) and the second toothed machine element (200) each have at least one assembly marking (27, 28) in order to enable a relative alignment of the first and second toothed machine element (100, 200).

**10.** Gear pump with a gear drive according to one of the claims 7 to 9.

**11.** Gear pump according to claim 10, which is configured as an external gear pump or as an internal gear pump.

**Revendications**

**1.** Élément de machine denté ou structuré (100) permettant la transmission de mouvements rotatifs, comportant les caractéristiques suivantes :

une denture périphérique (110) comportant plusieurs éléments dentés (111, 112,...) destinés à venir en prise dans un autre élément de machine denté (200) et à permettre ainsi la transmission du mouvement rotatif à l'autre élément de machine (200),
les plusieurs éléments dentés (111, 112,...) étant **caractérisés par** des paramètres géométriques ($\alpha$, $S$) et au moins un élément denté (111) des plusieurs éléments dentés différant d'autres éléments dentés (112, 113) des plusieurs éléments dentés par au moins l'un des paramètres géométriques suivants ($\alpha$, $S$) : un angle de prise ($\alpha$), une mise à l'échelle de dents ($S$),
**caractérisé en ce que**
les éléments dentés (111, 112,...) sont **caractérisés par** des points caractéristiques (321, 322, 323) et qu'au moins l'un des éléments dentés (111) des plusieurs éléments dentés est mis à l'échelle avec au moins deux facteurs de mise à l'échelle locaux différents l'un de l'autre (351, 352, 353) de telle sorte que les points caractéristiques (321, 322, 323) sont mis à l'échelle différemment et qu'un élément denté déformé (330, 340) est créé.

**2.** Élément de machine selon la revendication 1, dans lequel les paramètres géométriques ($\alpha$, $S$) évoluent par sections le long d'une périphérie de la denture (110) de sorte que la séquence des paramètres géométriques ($\alpha$, $S$) sur les éléments dentés reste identique pour plusieurs sections consécutives.

**3.** Élément de machine (100) selon l'une des revendications précédentes, dans lequel les paramètres géométriques ($\alpha$, $S$) comprennent également au moins l'un des paramètres suivants : une épaisseur de dent, une position de dent, une hauteur de dent, une profondeur de base d'entredent, une correction de largeur, un bombé de largeur, une correction d'angle d'hélice, une dépouille d'extrémité, une correction de hauteur de profil, un bombé de hauteur, une correction d'angle de profil, une dépouille de tête, une dépouille de pied, une correction de profil, un décalage.

**4.** Élément de machine (100) selon l'une des revendications précédentes, dans lequel la denture périphérique (110) est au moins l'une des dentures suivantes : une denture droite, une denture hélicoïdale, une denture hypoïde, une denture à chevrons, une denture en développante, une denture cycloïde, une denture en arc de cercle, une denture à lanterne, une denture interne, une denture externe.

**5.** Élément de machine (100) selon l'une des revendications précédentes, qui présente une matière métallique ou synthétique et/ou a été produit par au moins l'un des procédés suivants : coulée, frittage, fusion laser sélective, impression 3D ou un autre procédé de fabrication additive utilisant une matière synthétique, un métal ou un alliage métallique.

**6.** Transmission par engrenages comportant :

un premier élément de machine denté (100) selon l'une des revendications 1 à 5 ; et
au moins un second élément de machine denté (200) selon l'une des revendications 1 à 5,
le premier élément de machine denté (100) et le second élément de machine denté (200) étant en prise afin de transmettre un mouvement de rotation, et l'au moins un paramètre géométrique ($\alpha$, $S$) étant modifié le long d'une périphérie afin de réduire les composantes tonales d'un bruit produit par le mouvement rotatif.

**7.** Transmission par engrenages selon la revendication 6, dans laquelle les paramètres géométriques ($\alpha$, $S$) du premier élément de machine denté (100) et du second élément de machine denté (200), lesquels diffèrent le long de la périphérie, sont alternativement conçus de sorte qu'une prise de dents sans interférence et une transmission continue de mouvements rotatifs et de couples est possible.

8. Transmission par engrenages selon la revendication 6 ou la revendication 7, dans laquelle la transmission par engrenages est un engrenage droit, un engrenage conique, un engrenage droit conique, un engrenage hypoïde, un engrenage à vis sans fin, un engrenage droit à vis sans fin, un engrenage hélicoïdal, un engrenage hyperboloïde, un engrenage de couronne dentée ou un engrenage épicycloïdal.

9. Transmission par engrenages selon l'une des revendications 6 à 8, dans laquelle le premier élément de machine denté (100) et le second élément de machine denté (200) présentent respectivement au moins un marquage d'assemblage (27, 28) afin d'assurer un alignement relatif des premier et second éléments de machine dentés (100, 200) lors de l'assemblage.

10. Pompe à engrenages comportant une transmission par engrenages selon l'une des revendications 7 à 9.

11. Pompe à engrenages selon la revendication 10, laquelle est conçue comme pompe à engrenages externe ou pompe à engrenages interne.

Fig. 1

Fig. 2

L

L

200

100

200

100

Fig. 3A

15

Fig. 3B

Fig. 3C

Fig. 4

Fig. 5

Fig. 6

Fig. 7A

Fig. 7B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3533743
- DE 3934841
- DE 397039
- US 4036073 A